# EUROPÄISCHE PATENTANMELDUNG

(11) **EP 0 950 701 A1**
(43) Veröffentlichungstag der Anmeldung: **20.10.1999**
(21) Anmeldenummer: 99106917.0
(22) Anmeldetag: 08.04.1999
(51) Int. Cl.: C09K 19/00, C09K 19/60, C09B 67/00, C09D 11/00, G03G 9/08

(54) **Infrarotstrahlung reflektierende Farbmittel**

(30) Priorität: 17.04.1998 DE 19817069
(71) Anmelder: Clariant GmbH, 65929 Frankfurt am Main (DE)
(72) Erfinder: Schönfeld, Axel, Dr., 65207 Wiesbaden (DE); Stohr, Andreas, Dr., 65830 Kriftel (DE)

(57) **Zusammenfassung**

Farbmittelzusammensetzung, bestehend im wesentlichen aus einem oder mehreren cholesterischen flüssigkristallinen Polymer(en) mit einer Ganghöhe der helikalen Überstruktur zwischen 760 nm und 500 µm, und mindestens einem Licht im sichtbaren Wellenlängenbereich absorbierenden Farbmittel. Als Farbmittel kommen organische oder anorganische Pigmente oder Farbstoffe in Betracht. Beschichtungen mit derartigen Farbmittelzusammensetzungen zeichnen sich durch wärmedämmende Eigenschaften aus.

## Beschreibung

Die Erfindung betrifft flüssigkristalline Farbmittelzusammensetzungen, die Wärmestrahlung reflektieren, ein Verfahren Zu ihrer Herstellung sowie deren Verwendung.

Cholesterische flüssigkristalline Hauptkettenpolymere (cLCP) mit blickwinkelabhängigem Farbeffekt sind bekannt und können analog nematischer Hauptkettenpolymere hergestellt werden, indem ein zusätzliches chirales Comonomer verwendet wird (US-A-4,412,059; EP-A-0 196 785; EP-A-0 608 991; EP-A-0 391 368) oder indem nematische Hauptkettenpolymere (LCP) mit chiralen Comonomeren umgesetzt werden (EP-A-0 283 273). Cholesterische Hauptkettenpolymere besitzen eine helikale Überstruktur und zeichnen sich durch ausgeprägte Farbeffekte aus, die auf der selektiven Reflexion an der helikalen Überstruktur beruhen. Die genaue Reflexionswellenlänge hängt hierbei vor allem von der Ganghöhe der Helix ab. Die sich ausbildende Ganghöhe der Helix hängt im wesentlichen von dem Anteil des chiralen Comonomers, der Art des Einbaus in das Polymer, des Polymerisationsgrads und der Struktur des chiralen Comonomers ab. Außerdem zeigen viele Systeme noch eine Temperaturabhängigkeit der Ganghöhe in der cholesterischen Phase.

Wärme reflektierende plättchenförmige Partikel sind bekannt. Diese bestehen in der Regel aus beschichteten Glimmerplättchen. Die Schichtstärke wird hierbei derart ausgewählt, daß die Reflexion im IR Bereich liegt und farblose, transparente Plättchen vorliegen. Aufgrund der Blickwinkelabhängigkeit der Reflexion erscheinen solche Plättchen nicht bei allen Blickwinkeln farblos. Bei schrägem Durchblick zeigen sie meist einen unerwünschten grünlichen Farbschimmer. Plättchen, die neben ihrer IR-Reflexion einen homogenen, deckenden Farbeffekt aufweisen, sind bisher nicht beschrieben.

Aufgabe der vorliegenden Erfindung ist es, ein Material zur Verfügung zu stellen, welches egale Färbungen ohne farbliche Inhomogenitäten ergibt und Wärmestrahlung reflektiert.

Es wurde gefunden, daß diese Aufgabe überraschenderweise durch IR-Strahlung reflektierende cholesterische flüssigkristalline Polymere, die mit einem lichtabsorbierenden Farbmittel eingefärbt sind, gelöst wird und daß so auf einfache Weise neuartige Materialien bereitgestellt werden.

Gegenstand der vorliegenden Erfindung ist eine Farbmittelzusammensetzung, bestehend im wesentlichen aus einem oder mehreren cholesterischen flüssigkristallinen Polymer(en) mit einer Ganghöhe der helikalen Überstruktur von 760 nm bis 500 µm, insbesondere von 760 nm bis 25 µm und mindestens einem Licht im sichtbaren Wellenlängenbereich absorbierenden Farbmittel.

Unter Farbmitteln, die Licht im sichtbaren Wellenlängenbereich absorbieren, werden solche verstanden, die mindestens ein Absorptionsmaximum zwischen 350 und 750 nm aufweisen. Unter Farbmitteln sind im Sinne der vorliegenden Erfindung sowohl Farbstoffe als auch Pigmente zu verstehen.

Ein mit besagtem Farbmittel eingefärbtes cholesterisches flüssigkristallines Polymer hat im nicht-orientierten Zustand die Farbe des Farbmittels, ohne daß ein merklicher wärmedämmender Effekt auftritt. Orientiert man eine solche Probe in der cholesterischen Phase, so kann man neben der unveränderten Coloristik des Farbmittels die Wärmestrahlung reflektierenden Eigenschaften beobachten.

Die der Erfindung zugrundeliegenden cholesterischen Polymere umfassen sowohl cholesterische flüssigkristalline Hauptkettenpolymere, cholesterische flüssigkristalline Seitengruppenpolymere als auch kombinierte flüssigkristalline Hauptketten-/Seitengruppenpolymere.

Cholesterische flüssigkristalline Seitengruppenpolymere sind beispielsweise Polysiloxane, cyclische Siloxane, Polyacrylate oder Polymethacrylate mit Mesogenen in den Seitengruppen. Die Mesogene in der Seitengruppe sind beispielsweise mit Cholesterin substituierte Phenylbenzoate oder Biphenole.

Die Hauptkettenpolymere sind vorzugsweise flüssigkristalline Polyester, Polyamide oder Polyesteramide, die aromatische und/oder cycloaliphatische Hydroxycarbonsäuren, aromatische Aminocarbonsäuren; aromatische und/oder cycloaliphatische Dicarbonsäuren, und aromatische und/oder cycloaliphatische Diole und/oder Diamine; sowie ein oder mehrere chirale, bifunktionelle Comonomere enthalten.

Cholesterische flüssigkristalline Hauptkettenpolymere werden im allgemeinen aus einer chiralen Komponente sowie aus Hydroxycarbonsäuren und/oder einer Kombination aus Dicarbonsäuren und Diolen hergestellt. In der Regel bestehen die Polymere im wesentlichen aus aromatischen Bestandteilen. Es ist jedoch auch möglich, aliphatische und cycloaliphatische Komponenten, wie beispielsweise Cyclohexandicarbonsäure, einzusetzen.

Bevorzugt im Sinne der vorliegenden Erfindung sind cholesterische flüssigkristalline Hauptkettenpolymere, bestehend aus
a) 0 bis 99,8 Mol% einer oder mehrerer Verbindungen aus der Gruppe der aromatischen Hydroxycarbonsäuren, cycloaliphatischen Hydroxycarbonsäuren und aromatischen Aminocarbonsäuren;
b) 0 bis 50 Mol% einer oder mehrerer Verbindungen aus der Gruppe der aromatischen Dicarbonsäuren und cycloaliphatischen Dicarbonsäuren;
c) 0 bis 50 Mol% einer oder mehrerer Verbindungen aus der Gruppe der aromatischen und cycloaliphatischen Diole und Diamine; und
d) 0,1 bis 40 Mol%, vorzugsweise 1 bis 25 Mol%, an chiralen, bifunktionellen Comonomeren;
wobei die Summe 100 Mol% ergibt.

Bei den angegebenen Prozentsätsen ist darauf zu achten, daß die dem Fachmann bekannte Stöchiometrie der funktionellen Gruppen zur Polykondensation gewährleistet ist. Zusätzlich können die Polymere noch Komponenten mit nur einer funktionellen Gruppe oder mit mehr als zwei funktionellen Gruppen, wie beispielsweise Dihydroxybenzoesäure, Trihydroxybenzole oder Trimellitsäure enthalten. Auf diese Weise kann Einfluß auf das Molekulargewicht der Polymeren genommen werden. Die Komponenten mit mehr als zwei funktionellen Gruppen wirken als Verzweigungsstelle im Polymer und dürfen nur in geringen Konzentrationen, beispielsweise 0 bis 5 Mol-%, zugegeben werden, wenn eine Vernetzung des Materials während der Kondensation vermieden werden soll.

Besonders bevorzugt sind cholesterische Hauptgruppenpolymere, die aus folgenden Bausteinen der einzelnen Monomergruppen aufgebaut sind:
a) Aromatische Hydrorycarbonsäuren, Aminocarbonsäuren:
   Hydroxybenzoesäuren, Hydroxynaphthalincarbonsäuren, Hydroxybiphenylcarbonsäuren, Aminobenzoesäuren, Hydroxyzimtsäuren;
b) Aromatische Dicarbonsäuren, aliphatische Dicarbonsäuren:
   Terephthalsäure, Isophthalsäure, Biphenyldicarbonsäuren, Naphthalindicarbonsäuren, Cyclohexandicarbonsäuren, Pyridindicarbonsäuren, Diphenyletherdicarbonsäuren, Carboxyzimtsäuren sowie 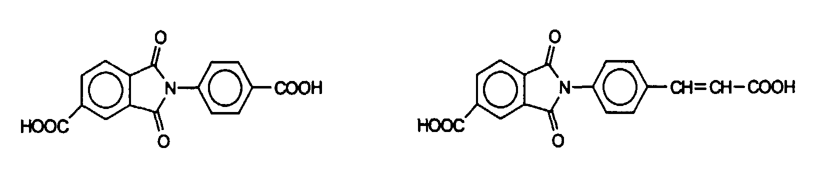
c) Aromatische Diole, Aminophenole, Diamine:
   Hydrochinone, Dihydroxybiphenyle, Tetramethyldihydroxybiphenyle, Naphthalindiole, Dihydroxydiphenylsulfone, Dihydroxydiphenylether, Dihydroxyterphenyle, Dihydroxydiphenylketone, Phenylendiamine, Diaminoanthrachinone, Dihydroxyanthrachinone sowie 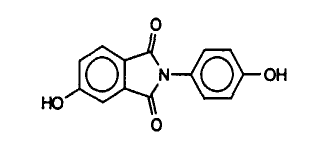
d) Chirale, bifunktionelle Monomere:
   Isosorbid, Isomannid, Isoidid, Camphersäure, (D)- oder (L)-Methylpiperazin, (D)- oder (L)- 3-Methyladipinsäure, Butan-2,3-diol sowie 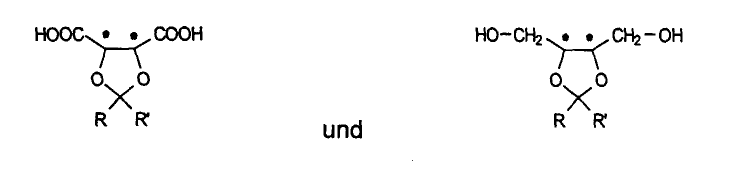 wobei R und R' jeweils unabhängig voneinander H, C₁-C₆-Alkyl oder Phenyl, vorzugsweise H oder CH₃, sind.

Die beschriebenen Polymerbausteine können noch weitere Substituenten, wie beispielsweise Methyl, Methoxy, Cyano oder Halogen, enthalten.

Ganz besonders bevorzugt im Sinne der vorliegenden Erfindung sind Polymere, enthaltend ein oder mehrere Monomere aus der Gruppe p-Hydroxybenzoesäure, 2-Hydrory-6-naphthoesäure, Terephthalsäure, Isophthalsäure, 2,6-Naphthalindicarbonsäure, Hydrochinon, Resorcin und 4,4'-Dihydroxybiphenyl; sowie Camphersäure, Isosorbid und/oder Isomannid als chirale Komponente.

Um den erfindungsgemäßen wärmedämmenden Effekt zu erzielen, ist es notwendig, daß das orientierte cholesterische Polymer oder der orientierte cholesterische Polymerblend eine helikale Überstruktur mit einer Ganghöhe aufweist, die einer Wellenlänge im IR-Bereich entspricht. Die cholesterische Verbindung reflektiert überwiegend denjenigen Strahlungsanteil, dessen Wellenlänge der Ganghöhe der helikalen Überstruktur entspricht. Die Einstellung der gewünschten Ganghöhe kann über die Art und/oder über den Gehalt an chiraler Komponente im Polymer eingestellt werden. Es ist auch möglich, die Ganghöhe durch Mischen mindestens eines cholesterischen Polymers mit mindestens einem nematischen oder einem anderen cholesterischen Polymer einzustellen. Das genaue Vorgehen ist beispielsweise in DE 196 12 973 A1 beschrieben.

Die der erfindungsgemäßen Farbmittelzusammensetzung zugrundeliegenden Farbmittel können anorganische oder organische Pigmente sein. Als anorganische Pigmente seien beispielsweise genannt: Titandioxid, Eisenoxide, Metalloxid-Mischphasenpigmente, Cadmiumsulfide, Ultramarinblau- oder Chromat-Molybdat-Pigmente. Als organische Pigmente können alle dem Fachmann aus der einschlägigen Literatur, z.B. W. Herbst, K. Hunger, Industrielle Organische Pigmente, VCH Verlag, 1987, hinlänglich bekannten Pigmente eingesetzt werden, z.B. Ruß-, Anthanthron-, Anthrachinon-, Dioxazin-, Phthalocyanin-, Chinacridon-, Diketopyrrolopyrrol-, Perylen-, Perinon-, Azomethin-, Isoindolin- oder Azopigmente.

Die der erfindungsgemäßen Farbmittelzusammensetzung zugrundeliegenden Farbmittel können auch Farbstoffe sein, die vollständig oder teilweise in dem cholesterischen Flüssigkristallpolymer gelöst sind. Die Verwendung solcher Farbstoffe kann vorteilhaft sein, da sich diese normalerweise in das cholesterische Flüssigkristallpolymer leichter einarbeiten lassen und brillantere Farbtöne ergeben. Geeignete Farbstoffe im Sinne der vorliegenden Erfindung sind beispielsweise Chinophthalon-, Perinon-, Anthrachinon-, Azomethinkomplex-, Azlacton- und Azofarbstoffe.

Um spezielle coloristische Effekte zu erzielen, können als Farbmittel für die erfindungsgemäße Farbmittelzusammensetzung auch Mischungen verschiedener Pigmente oder Farbstoffe oder Mischungen von Farbstoffen mit Pigmenten eingesetzt werden.

Die Mengenverhältnisse zwischen dem cholesterischen flüssigkristallinen Polymer und dem Farbmittel können in weiten Grenzen schwanken und sind abhängig von der Art des Farbmittels und dem jeweils gewünschten Farbeffekt. Zweckmäßigerweise besteht die erfindungsgemäße Farbmittelzusammensetzung aus 1 bis 60 Gew.-%, vorzugsweise 3 bis 20 Gew.-%, an Farbmittel und 40 bis 99 Gew.-%, vorzugsweise 80 bis 97 Gew.-%, an cholesterischem flüssigkristallinen Polymer. Weiterhin können 0 bis 10 Gew.-%, vorzugsweise 0 bis 5 Gew.-%, bezogen auf das Gesamtgewicht, an üblichen Hilfsstoffen und Additiven aus der Gruppe der nichtionogenen, anionischen oder kationischen Tenside, synthetischen und/oder natürlichen Wachse, synthetischen und/oder natürlichen Fettsäuren oder Fettsäureester, Stabilisatoren (z.B. UV- oder Wärmestabilisatoren, Antioxidantien), Antistatika und optischen Aufheller in der erfindungsgemäßen Farbmittelzusammensetzung enthalten sein. Liegen die Farbmittelkonzentrationen oberhalb von etwa 20 Gew.-%, so liegt in der Regel ein Masterbatch vor, der ebenfalls, wie nachstehend beschrieben, Gegenstand der Erfindung ist.

Gegenstand der vorliegenden Erfindung ist auch ein Verfahren zur Herstellung der erfindungsgemäßen Farbmittelzusammensetzung, dadurch gekennzeichnet, daß man eine Schmelze des cholesterischen flüssigkristallinen Polymers mit dem Farbmittel und gegebenenfalls den Hilfsstoffen und Additiven vermischt, bis eine homogene Verteilung vorliegt, und wobei das flüssigkristalline Polymer auf eine Temperatur erhitzt wird, die größer oder gleich seiner Chiralisierungstemperatur ist. Das Vermischen kann mit allen dafür geeigneten Mischaggregaten, wie beispielsweise Dispersionsknetern, ®ßanburry-Knetern oder Schneckenknetern, oder durch Extrusion, beispielsweise in einem Ein- oder Zweischneckenextruder, erfolgen.

In einer weiteren Ausführungsform kann das Farbmittel auch direkt während der Herstellung des cholesterischen flüssigkristallinen Polymers, zweckmäßigerweise gegen Ende der Polykondensationsreaktion, vorzugsweise unmittelbar vor dem Austrag des fertigen Polymers, zugegeben werden.

Auch ist es möglich, das Farbmittel in Form eines Masterbatchs in das cholesterische Flüssigkristallpolymer einzuarbeiten. Als Träger für einen Masterbatch können synthetische und natürliche Wachse, Polymere und Kautschuke eingesetzt werden. Bevorzugter Träger für einen Masterbatch ist jedoch das cholesterische Flüssigkristallpolymer selbst. Der Masterbatch kann ein Pigment oder einen Farbstoff oder auch eine Mischung verschiedener Pigmente und/oder Farbstoffe enthalten. Auch können in den Masterbatch weitere Hilfsstoffe und/oder Additive eingearbeitet werden. Die Herstellung solcher Masterbatchs kann nach allen bekannten Verfahren durchgeführt werden, beispielsweise durch inniges Vermischen der Farbmittel mit dem Träger in der Schmelze in geeigneten Mischaggregaten, beispielsweise Dispersionskneter, Banburry-Kneter oder Schneckenkneter, z.B. Zweischneckenkneter. Die Einfärbung des cholesterischen flüssigkristallinen Polymeren mit dem Masterbatch kann durch Mischen der beiden Materialien und anschließendem Extrudieren erfolgen. Auch kann der Masterbatch als Schmelze in die Schmelze des cholesterischen Flüssigkristallpolymeren über einen Seitenextruder und/oder einer Schmelzpumpe zudosiert werden. Am wirtschaftlichsten erfolgt dies beim Austrag des cholesterischen flüssigkristallinen Polymers aus dem Reaktor nach der Polykondensation.
Die nach den vorstehend beschriebenen Verfahren hergestellten eingefärbten flüssigkristallinen Polymere liegen normalerweise als physikalische Mischung aus Farbmittel und Polymer vor. Da bei dem Herstellungsverfahren in der Regel bei höheren Temperaturen gearbeitet wird, kann es nicht ausgeschlossen werden, daß insbesondere im Falle von Farbstoffen mit funktionellen Gruppen wie Carboxyl, Sulfo oder Hydroxyl zumindest teilweise eine chemische Bindung an das cholesterische flüssigkristalline Polymer stattfindet.

Die Herstellung der cholesterischen flüssigkristallinen Polymere kann dadurch erfolgen, daß die dem besagten Polymer zugrundeliegenden monomeren Verbindungen als solche oder in Form eines reaktiven Derivats in der Schmelze, in Lösung oder in emulgierter oder disperser Phase kondensiert werden.

Die erfindungsgemäß eingesetzten Monomere können entweder direkt eingesetzt werden, oder es können auch zweckmäßige Vorstufen verwendet werden, die sich unter den nachfolgenden Reaktionsbedingungen zu den gewünschten Monomeren umsetzen. So kann beispielsweise Aminophenol und Trimellitsäureanhydrid anstelle von N-(4-Hydroxyphenyl)trimellitimid eingesetzt werden.

Die Polykondensation kann nach allen üblichen Methoden durchgeführt werden. Beispielsweise eignet sich die Schmelzkondensation mit Acetanhydrid, die beispielsweise in EP-A-0 391 368 beschrieben ist. Die Kondensation mit Acetanhydrid ist auch in Lösung oder in disperser oder emulgierter Phase möglich.

Bevorzugt erfolgt die Verknüpfung der Monomere über Esterbindungen (Polyester), Amidbindungen (Polyesteramid/Polyamid) und/oder über Imidbindungen (Polyesterimid/Polyimid), jedoch kann die Verknüpfung auch über andere bekannte Verknüpfungsarten wie beispielsweise Carbonat erfolgen.

Anstelle der Carbonsäuren können auch Carbonsäurederivate, wie beispielsweise Säurechloride oder Carbonsäureester, eingesetzt werden. Anstelle der Hydroxyverbindungen können auch entsprechende Hydroxyderivate, wie beispielsweise die acetylierten Hydroxyverbindungen, eingesetzt werden.

Die erfindungsgemäß eingesetzten Polymere können auch vernetzbare Gruppen enthalten, so daß es möglich ist, ein orientiertes Flüssigkristallpolymer beispielsweise durch eine Photovernetzung zu fixieren. Vernetzte cLCPs können auch erhalten werden, indem man niedermolekulare Precurser mit mindestens drei funktionellen Gruppen oder mit mindestens zwei polymerisierbaren Doppelbindungen direkt vernetzt.

In einer bevorzugten Ausführungsform weisen die erfindungsgemäß eingesetzten cLCPs eine sehr geringe Löslichkeit auf, so daß ihre Molekulargewichte nicht mit kommerziell üblichen Methoden (GPC, Lichtstreuung) bestimmt werden können. Als Maß für das Molekulargewicht kann die intrinsische Viskosität der Polymere in einer Lösung aus Pentafluorphenol/Hexafluorisopropanol herangezogen werden. Bevorzugt sind Polymere mit einer intrinsischen Viskosität zwischen 0,1 dl/g und 10 dl/g.

Die erfindungsgemäß eingesetzten Polymere können direkt eingesetzt werden. Es ist jedoch auch möglich, Blends als erfindungsgemäße Polymere einzusetzen, die aus mehreren, vorzugsweise 2, cholesterischen flüssigkristallinen Polymeren bestehen, oder die aus einem oder mehreren nematischen und einem oder mehreren cholesterischen flüssigkristallinen Polymeren bestehen.Die Komponenten eines Blends werden zweckmäßigerweise so gewählt, daß sich ein Gangunterschied der helikalen Überstruktur zwischen 760 nm und 500 µm ausbildet.

Die erfindungsgemäßen Farbmittelzusammensetzungen können als Werkstoff weiterverarbeitet werden. Ein Werkstoff ist ein geformtes Gebilde wie beispielsweise Spritzgußartikel, extrudierte Profile oder Rohre, Bändchen, Folien oder Fasern. Insbesondere eignen sich die erfindungsgemäßen Farbmittelzusammensetzungen jedoch für Beschichtungen von Gegenständen, die sich nicht stark aufheizen sollen, z.B. als Bestandteil in Automobilserienlacken, sowie zur Herstellung von plättchenförmigen Pigmenten.

Plättchenförmige Pigmente lassen sich beispielsweise herstellen, indem die erfindungsgemäße Farbmittelzusammensetzung in der Schmelze oder als Dispersion auf einer Trägerfolie aufgerakelt wird und auf die Chiralisierungstemperatur erhitzt wird. Nach dem Abkühlen wird der Film von der Trägerfolie entfernt und auf die gewünschte Plättchengröße zerkleinert. Die so erhaltenen plättchenförmigen Pigmente lassen sich als Farbmittel in Lacken applizieren.

### Pulvereffoktbeschichtungen lassen sich nach folgenden bevorzugten Methoden applizieren:

Ein feinteiliges Pulver der erfindungsgemäßen Farbmittelzusammensetzung wird beim Versprühprozess elektrostatisch aufgeladen. Dies geschieht beim Corona-Verfahren durch Vorbeiführen des Pulvers an einer geladenen Corona. Dabei wird das Pulver selbst aufgeladen. Beim triboelektrischen bzw. elektrokinetischen Verfahren wird vom Prinzip der Reibungselektrizität Gebrauch gemacht. Das Pulver erhält im Sprühgerät eine elektrostatische Aufladung, die der Ladung des Reibungspartners, im allgemeinen ein Schlauch oder ein Sprührohr (beispielsweise aus Polytetrafluorethylen), entgegengesetzt ist. Die elektrostatische Aufladung führt zu einem hohen Abscheidegrad des Pulvers auf dem zu beschichtenden Gegenstand. Nach dem Auftragprozess auf das Objekt wird die Pulverschicht auf Temperaturen oberhalb des Erweichungspunktes des Pulvers erhitzt, bei welchen die Polymere einen homogenen Film bilden und die helikalen Überstrukturen ausbilden. Die Temperatur, bei welcher die Ausbildung der helikalen Struktur beginnt, wird im folgenden als Chiralisierungstemperatur bezeichnet.
Die speziellen wärmedämmenden Eigenschaften einer Pulverbeschichtung werden erst beobachtet, wenn die Polymermoleküle bei oder oberhalb der Chiralisierungstemperatur die helikale Struktur ausgebildet haben, welche die Reflexion der IR-Strahlung verursacht. Der Übergang in die cholesterische Phase erfolgt in vielen Fällen bereits bei der Synthese der Polymeren. Die Wellenlänge der Selektivreflexion der erfindungsgemäß eingesetzten cLCPs wird durch die Ganghöhe der helikalen Struktur bestimmt. Die Ganghöhe ist abhängig von der Struktur des Polymeren, der Schmelzviskosität, der Gegenwart von Lösemitteln und insbesondere von der Verdrillungskraft des chiralen Monomers ("helical twisting power"). Sie ist außerdem eine Funktion der Temperatur. Entsprechend läßt sich die Ganghöhe der Helix auch über die Temperatur einstellen. Durch schnelles Abkühlen der beschichteten Substrate läßt sich die Ganghöhe der Helix und somit die Wellenlänge der Selektivreflexion dauerhaft einfrieren. Im allgemeinen gilt, daß mit steigendem Gehalt an chiralen Monomeren die Verdrillung der Helix zunimmt und somit die Ganghöhe der Helix abnimmt.

Begünstigt werden kann die Ausbildung der helikalen Struktur durch die Temperatur, die Einwirkung von Scherkräften und durch Untergründe mit polymeren Schichten, wie beispielsweise Polyvinylalkohol, Cellulosederivate und Polyimide. Der Orientierungsprozess der Polymermoleküle kann je nach Struktur der Polymeren auch durch elektrische und magnetische Felder positiv beeinflußt werden.

Eine weitere, bevorzugte Möglichkeit zur Beschichtung von Objekten mit pulverförmigen Stoffen ist das Flammspritzverfahren. Bei diesem Verfahren wird das Pulver mit einem Trägergas (z. B. in einem Wirbelbett) fluidisiert und der zentralen Düse einer Flammspritzpistole zugeführt. Gleichzeitig wird in der Flammspritzpistole ein Brenngas/Sauerstoffgemisch erzeugt, welches in vielen kleinen um das Zentrum herum ringförmig angeordneten Flämmchen verbrannt wird. Dabei schmelzen die pulverförmigen Teilchen auf und werden anschließend auf dem zu beschichtenden Objekt als Tröpfchen abgeschieden, die im Verlauf des Spritzprozesses zu einem Film zusammenfließen. Dieses Verfahren bietet den besonderen Vorteil, daß der Schmelzvorgang in den Versprühprozess integriert ist, so daß in einem Arbeitsschritt der Auftrag der Beschichtung auf den Gegenstand und die Filmbildung erfolgen kann.

Eine weitere bevorzugte Ausführungsform zur Pulverbeschichtung ist das Wirbelsinterverfahren. Hierzu wird in einem geeigneten Behälter mit Hilfe eines Trägergases und der erfindungsgemäßen Farbmittelzusammensetzung eine Wirbelschicht erzeugt. Das zu beschichtende Objekt wird in einer separaten Wärmekammer auf die für die Beschichtung notwendige Temperatur erhitzt, und nach Erreichen dieser Temperatur wird es für eine bestimmte Zeit in die Wirbelschicht eingetaucht. Dabei bleiben pulverförmige Teilchen an der Objektoberfläche haften, schmelzen auf, fließen zu einem Film zusammen und bilden die helikale Struktur aus. In manchen Fällen ist es vorteilhaft, das beschichtete Objekt einer weiteren Temperaturbehandlung zu unterziehen, um die Filmbildung und die Orientierung der Polymermoleküle zu verbessern. In anderen Fällen läßt man das Objekt an der Luft abkühlen oder schreckt es mit Wasser ab. Auch dieses Verfahren bietet den besonderen Vorteil, daß der Schmelzvorgang in den Beschichtungsprozess integriert ist, so daß in einem Arbeitsschritt der Auftrag der Beschichtung auf den Gegenstand, die Orientierung der Polymermoleküle und die Filmbildung erfolgen kann.

Bei allen beschriebenen Pulverbeschichtungsverfahren und insbesondere beim Wirbelsinter- und Flammspritzverfahren ist die Teilchenform und damit die Rieselfähigkeit des Pulvers sowie die Komgrößenverteilung des Pulvers von großer Bedeutung. Bevorzugt sind Teilchen, die der Kugelform möglichst nahe kommen und die eine enge Korngrößenverteilung aufweisen. Kugelförmige Teilchen werden auf einfache Weise bei Prozessen erhalten, bei welchen die Polymerisation in einer emulgierten oder dispergierten Phase durchgeführt wird. Bei den Mahlprozessen werden je nach eingesetztem Mühlentyp engere oder breitere Korngrößenverteilungen erhalten. In einigen Fällen ist es vorteilhaft, einen Sieb-, Klassifizier- oder Sichtungsprozess an die Mahlung anzuschließen, um eine möglichst enge Korngrößenverteilung zu erreichen. In anderen Fällen ist es vorteilhaft, zuerst ein sehr feinteiliges Pulver herzustellen, welches dann gezielt zu der gewünschten Teilchengröße agglomeriert werden kann.

Die gewünschte Kornfeinheit ist ausschlaggebend für die Schichtdicke der Pulverbeschichtung, die Art des zu beschichtenden Objekts und das angewandte Applikationsverfahren. Werden auf dem zu beschichtenden Objekt dünne Lackschichten gewünscht, so ist eine mittlere Teilchengröße des Pulvers zwischen 1 und 100 µm, vorzugsweise zwischen 15 und 80 µm, anzustreben. Werden dicke Schichten auf dem Objekt gewünscht, wie sie normalerweise beim Wirbelsintern und Flammspritzen appliziert werden, so ist eine mittlere Teilchengröße zwischen 80 und 300 µm, vorzugsweise 100 bis 250 µm, vorteilhaft. Beim Wirbelsintern und Flammspritzen ist auf die Einhaltung der Korngrößengrenzen besonders zu achten. Zu kleine Teilchen werden durch die hohen Flammtemperaturen zu stark erhitzt und verkohlen oder werden durch den Gasstrom weggeblasen. Zu grobe Teilchen werden dagegen nicht vollständig aufgeschmolzen und können sich bei der anschließenden Filmbildung nicht optimal orientieren. In Ausnahmefällen kann es jedoch auch vorteilhaft sein, eine außerhalb dieses Bereichs liegende Korngrößenverteilung zu verwenden.

Wärmedämmende Pulverbeschichtungen können auf die unterschiedlichsten Substrate aufgebracht werden. Dies können beispielsweise Gegenstände aus natürlichen und synthetischen Materialien wie beispielsweise Holz, Kunststoffe, Papier, Metall oder Glas sein. Besonders bevorzugt ist die Beschichtung der Karosserie oder von Karosserieteilen von Kraftfahrzeugen.

In bevorzugten Fällen wird die wärmedämmende Beschichtung auf Metall- oder Kunststoffuntergründe aufgebracht. Diese sind meistens vorbeschichtet. Das heißt, Kunststoffsubstrate können mit einer Kunststoffgrundierung versehen sein, und metallische Substrate besitzen im allgemeinen eine elektrophoretisch aufgebrachte Grundierung und gegebenenfalls eine oder mehrere weitere Lackschichten wie beispielsweise eine Füllerschicht.
Die wärmedämmenden Beschichtungen können nach üblichen Methoden mit einem Klarlack überzogen werden. Als Klarlack sind grundsätzlich alle bekannten Klarlacke geeignet. Hierbei können sowohl lösungsmittelhaltige Einkomponenten- oder Zweikomponenten-Lacke sowie vorzugsweise wasserverdünnbare Klarlacke und insbesondere Pulverlacke eingesetzt werden. In manchen Fällen kann es zweckmäßig sein, die Klarlackschicht etwas dicker zu wählen oder zwei Klarlackschichten aus gleichen oder verschiedenen Flüssigklarlacken oder Pulverklarlacken aufzutragen. Der Klarlack enthält bekannterweise weitere Hilfsstoffe, die die Oberflächeneigenschaften der beschichteten Objekte verbessern. Zu erwähnen sind beispielsweise UV-Stabilisatoren und Lichtschutzmittel, die die darunterliegenden Schichten vor Abbaureaktionen schützen.

Eine weitere Möglichkeit, erfindungsgemäße Farbmittelzusammensetzungen in wärmedämmende Beschichtungen zu überführen, ist die Schmelzbeschichtung.

Hierbei wird die Farbmittelzusammensetzung als Schmelze auf das Substrat aufgezogen oder auf dem Substrat aufgeschmolzen und zu einer dünnen Schicht verarbeitet. Zum Aufbringen der Polymerschmelze eignet sich beispielsweise ein beheizbarer Rakel. Der Auftrag kann aber auch mit einfacheren Mitteln, wie beispielsweise einem Spachtel, erfolgen.

Die erfindungsgemäßen Beschichtungen zeichnen sich durch einfache Applikationsverfahren und durch ihre Wärmestrahlung reflektierende Eigenschaften bei nahezu beliebig einstellbarer homogener Coloristik als Einkomponentensystem aus, die durch die im Stand der Technik bekannten Einkomponentensysteme nicht zu erzielen sind.

Die erfindungsgemäßen Farbmittelzusammensetzungen können als solche oder in Form von plättchenförmigen Pigmenten auch in Komponenten für berührungslose Druckverfahren eingesetzt werden, beispielsweise in elektrophotographischen Tonern und Entwicklern und in Ink-Jet-Tinten.
In den nachfolgenden Beispielen bedeuten Teile Gewichtsteile.

### Beispiel 1:

7,4 Mol 2-Hydroxy-6-naphthoesäure, 15 Mol 4-Hydroxy-benzoesäure, 4,5 Mol 4,4'-Dihydroxybiphenyl und 3 Mol (1R,3S)-(+)-Camphersäure werden in einem Reaktor mit 30,75 Mol Essigsäureanhydrid versetzt und mit einem leichten Stickstoffstrom durchspült. Die Mischung wird unter Rühren innerhalb von 15 Minuten auf 140°C erhitzt und diese Temperatur für 45 Minuten gehalten. Danach wird die Temperatur innerhalb von 240 Minuten auf 325°C erhöht und die Schmelze 60 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum (ca. 25 mbar) gerührt. Danach wird mit Stickstoff belüftet und das Polymer ausgetragen und granuliert.
Das Polymer ist leicht hellgrau-beige gefärbt. Das Polymer reflektiert IR-Strahlung.

### Beispiel 2:

97 Gew.-% nach Beispiel 1 hergestelltes cholesterisches Flüssigkristallpolymer werden mit 3 Gew.-% C.I. Pigment Red 149 gemischt und anschließend im ®Rheomex-Einschneckenextruder (Firma Haake; Schneckendurchmesser 19 mm; Länge L/D =25:1; Schnecke mit Mischzone) extrudiert. Die Einzugszone wird auf 240°C und die folgenden Zonen auf 275°C geheizt. Die plastische Masse wird in einem Strang abgezogen und zu einem Granulat geschnitten. Die erhaltene Farbmittelzusammensetzung hat eine egale rote Farbe, die keinen blickwinkelabhängigen Farbeffekt aufweist, aber IR-Strahlung reflektiert.

### Beispiel 3:

90 Gew.-% nach Beispiel 1 hergestelltes cholesterisches Flüssigkristallpolymer werden mit 10 Gew.-% C.I. Pigment Blue 15:1 gemischt und anschließend im ®Rheomex-Einschneckenextruder (Firma Haake; Schneckendurchmesser 19 mm; Länge L/D =25:1; Schnecke mit Mischzone) extrudiert. Die Einzugszone wird auf 240°C und die folgenden Zonen auf 275°C geheizt. Die plastische Masse wird in einem Strang abgezogen und zu einem Granulat geschnitten. Die erhaltene Farbmittelzusammensetzung hat eine egale blaue Farbe, die keinen blickwinkelabhängigen Farbeffekt aufweist, aber IR-Strahlung reflektiert.

### Beispiel 4:

Die in Beispiel 2 hergestellte Farbmittelzusammensetzung wird auf einer Schneidmühle auf eine Kornfeinheit < 2 mm gemahlen. Die Endmahlung erfolgt auf einer Luftstrahlmühle mit Dosieranlage. Dabei wird ein rotes Pulver mit einer mittleren Korngröße D₅₀ von 33 µm erhalten.

### Beispiel 5:

### Herstellung einer Pulvereffektbeschichtung mit einer triboelektrischen Spritzpistole:

Das in Beispiel 4 hergestellte Pulver wird in den Pulverbehälter des Sprühgeräts "®Tribostar"' der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem schwarzen Pulverlack grundiertes Aluminiumblech durch kreuzweisen Auftrag beschichtet. Zur Filmbildung wird das beschichtete Blech 15 Minuten auf 225°C erhitzt und das Blech anschließend in Wasser getaucht. Es wird ein homogener Film erhalten, welcher eine egale rote Farbe sowie IR-Reflexion zeigt.

### Beispiel 6:

Die in Beispiel 3 hergestellte Farbmittelzusammensetzung wird auf einer Schneidmühle auf eine Kornfeinheit < 2 mm gemahlen. Die Endmahlung erfolgt auf einer Luftstrahlmühle mit Dosieranlage. Dabei wird ein blaues Pulver mit einer mittleren Korngröße D₅₀ von 6 µm erhalten.

### Beispiel 7:

Mit dem Material aus Beispiel 6 wird eine 30 gew. %-ige Dispersion in Isobutanol angerührt. Die Dispersion wird mit einem Spiralrakel, dessen Spaltbreite 24 µm beträgt, auf eine Polyimidfolie aufgezogen. Nach dem Trocknen des Dispersionsauftrages wird die Polyimidfolie mit dem Pulverauftrag kurz auf 280 °C aufgeheizt. Nach dem Abkühlen wird der Polymerfilm (Schichtdicke ca. 10 µm) von der Polyimidfolie abgeschabt, und die erhaltenen Flitter werden in einer Universalmühle gemahlen. Das Mahlgut wird zur Verengung der Teilchengrößenverteilung über ein Sieb mit 40 µm Maschenweite gesiebt. Das erhaltene Pigment wird in einen 2-Komponenten-Klarlack eingearbeitet, auf ein Modellauto aufgesprüht und mit einem Klarlack überzogen. Das Modellauto zeigt eine ansprechende blaue Farbe und weist eine Reflexion von IR-Strahlung auf.

## Patentansprüche

1. Farbmittelzusammensetzung, bestehend im wesentlichen aus einem oder mehreren cholesterischen flüssigkristallinen Polymer(en) mit einer Ganghöhe der helikalen Überstruktur zwischen 760 nm und 500 µm, und mindestens einem Licht im sichtbaren Wellenlängenbereich absorbierenden Farbmittel.

2. Farbmittelzusammensetzung nach Anspruch 1, dadurch gekennzeichnet, daß die Ganghöhe zwischen 760 nm und 25 µm ist.

3. Farbmittelzusammensetzung nach Anspruch 1 oder 2, dadurch gekennzeichnet, daß die cholesterischen flüssigkristallinen Polymere Seitengruppenpolymere sind, die in der Hauptkette Polysiloxane, cyclische Siloxane, Polyacrylate und/oder Polymethacrylate und in den Seitenketten mesogene Gruppen enthalten.

4. Farbmittelzusammensetzung nach Anspruch 1 oder 2, dadurch gekennzeichnet, daß die cholesterischen flüssigkristallinen Polymere Hauptkettenpolymere sind, die flüssigkristalline Polyester, Polyamide oder Polyesteramide sind, die aromatische und/oder cycloaliphatische Hydroxycarbonsäuren, aromatische Aminocarbonsäuren; aromatische und/oder cycloaliphatische Dicarbonsäuren und aromatische und/oder cycloaliphatische Diole und/oder Diamine; sowie ein oder mehrere chirale, bifunktionelle Comonomere enthalten.

5. Farbmittelzusammensetzung nach Anspruch 4, dadurch gekennzeichnet, daß das Hauptkettenpolymer aus 0 bis 99,8 Mol% einer oder mehrerer Verbindungen aus der Gruppe der aromatischen Hydroxycarbonsäuren, cycloaliphatischen Hydroxycarbonsäuren und aromatischen Aminocarbonsäuren;
0 bis 50 Mol% einer oder mehrerer Verbindungen aus der Gruppe der aromatischen Dicarbonsäuren und cycloaliphatischen Dicarbonsäuren;
0 bis 50 Mol% einer oder mehrerer Verbindungen aus der Gruppe der aromatischen und cycloaliphatischen Diole und Diamine; und
0,1 bis 40 Mol%, vorzugsweise 1 bis 25 Mol%, an chiralen, bifunktionellen Comonomeren;
wobei die Summe 100 Mol% ergibt, besteht.

6. Farbmittelzusammensetzung nach mindestens einem der Ansprüche 1 bis 5, dadurch gekennzeichnet, daß ein chirales, bifunktionelles Comonomer aus der Gruppe Isosorbid, Isomannid, Isoidid, Camphersäure, (D)- oder (L)-Methylpiperazin, (D)- oder (L)-3-Methyladipinsäure, Butan-2,3-diol, 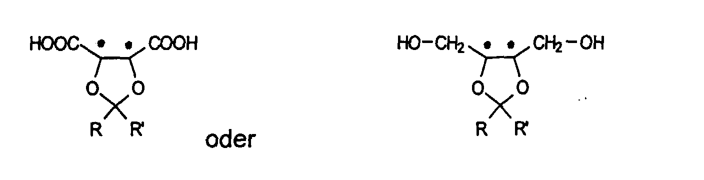 wobei R und R' jeweils unabhängig voneinander H, C₁-C₆-Alkyl oder Phenyl, vorzugsweise H oder CH₃, sind, oder eine Kombination davon in dem cholesterischen flüssigkristallinen Polymer enthalten ist.

7. Farbmittelzusammensetzung nach mindestens einem der Ansprüche 1 bis 6, dadurch gekennzeichnet, daß das Farbmittel Ruß, ein Anthanthron-, Anthrachinon-, Dioxazin-, Phthalocyanin-, Chinacridon-, Diketopyrrolopyrrol-, Perylen-, Perinon-, Azomethin-, Isoindolin- oder ein Azopigment ist.

8. Farbmittelzusammensetzung nach mindestens einem der Ansprüche 1 bis 7, dadurch gekennzeichnet, daß das Farbmittel ein Chinophthalon-, Perinon-, Anthrachinon-, Azomethinkomplex-, Azlacton- oder ein Azofarbstoff ist.

9. Farbmittelzusammensetzung nach mindestens einem der Ansprüche 1 bis 8, bestehend aus 1 bis 60 Gew.-% an Farbmittel, 40 bis 99 Gew.-% an cholesterischem flüssigkristallinem Polymer und 0 bis 10 Gew.-% an üblichen Hilfsstoffen und Additiven.

10. Verfahren zur Herstellung einer Farbmittelzusammensetzung nach mindestens einem der Ansprüche 1 bis 9, indem man eine Schmelze des cholesterischen flüssigkristallinen Polymers mit dem Farbmittel und gegebenenfalls den Hilfsstoffen und Additiven vermischt, bis eine homogene Verteilung vorliegt, oder indem man das Farbmittel und gegebenenfalls die Hilfsstoffe und Additive während der Polykondensation des Polymers zugibt; und wobei das flüssigkristalline Polymer auf eine Temperatur erhitzt wird, die größer oder gleich seiner Chiralisierungstemperatur ist.

11. Verfahren nach Anspruch 10, dadurch gekennzeichnet, daß das Polymer ein Blend aus mehreren, vorzugsweise zwei, cholesterischen flüssigkristallinen Polymeren oder ein Blend aus einem nematischen und einem cholesterischen flüssigkristallinen Polymer ist.

12. Verwendung einer Farbmittelzusammensetzung nach mindestens einem der Ansprüche 1 bis 9 als Werkstoff als Bestandteil in elektrophotographischen Tonern oder in Ink-Jet-Tinten, oder als Ausgangsmaterial zur Herstellung von wärmedämmenden Beschichtungen.
